**Europäisches Patentamt**

**European Patent Office**

**Office européen des brevets**

(19)

(11) Veröffentlichungsnummer: **0 275 096 B1**

(12) **EUROPÄISCHE PATENTSCHRIFT**

(45) Veröffentlichungstag der Patentschrift: **08.04.92**

(51) Int. Cl.5: **B09B 5/00**

(21) Anmeldenummer: **88100418.8**

(22) Anmeldetag: **14.01.88**

(54) **Einrichtung zum Einlagern und Behandeln von mit Schadstoffen belasteten Böden.**

(30) Priorität: **15.01.87 DE 8700630 U**

(43) Veröffentlichungstag der Anmeldung:
**20.07.88 Patentblatt 88/29**

(45) Bekanntmachung des Hinweises auf die
Patenterteilung:
**08.04.92 Patentblatt 92/15**

(84) Benannte Vertragsstaaten:
**AT BE CH DE FR LI NL**

(56) Entgegenhaltungen:
**EP-A- 0 192 285**
**DE-A- 3 507 240**
**FR-A- 2 446 131**
**US-A- 3 616 204**

**PT CIVIELE TECHNIEK, Band 39, Nr. 6, Juni
1984, Seiten 7-15, Rijswijk, NL; C.A. ZEWALD
et al.: "Biodegradatie als bodemsaneringstechniek"**

(73) Patentinhaber: **Hölscher, Richard, Dipl.-Ing.**
**Matthias-Claudius-Strasse 14**
**W-2970 Emden 1(DE)**

(72) Erfinder: **Hölscher, Richard, Dipl.-Ing.**
**Matthias-Claudius-Strasse 14**
**W-2970 Emden 1(DE)**

(74) Vertreter: **Patentanwälte Wenzel & Kalkoff**
**Flasskuhle 6 Postfach 2448**
**W-5810 Witten(DE)**

EP 0 275 096 B1

## Beschreibung

Die Erfindung betrifft eine Einrichtung zum Einlagern und Behandeln von mit organisch abbauaren Schadstoffen belasteten Böden in Form eines Lagerkörpers mit einem eine Abdichtung bildenden, mit einem Lagerkörper aus Boden in Form von Schüttgut oder Blöcken beladbaren Lagerelement und mit mindestens einer Vorrichtung für die Beeinflussung der physikalischen Bedingungen im Lagerkörper wie Frischluftanteil, Frischluftdurchsatz und Feuchtigkeit und mit einer den Lagerkörper umschließenden Wandung.

In den letzten Jahren hat sich die Erkenntnis durchgesetzt, daß schadstoffbelastete Böden entsorgt werden müssen und nicht unbehandelt an Ort und Stelle verbleiben können. Entsprechende Gesetze schreiben dies im Falle der Wassergefährdung zwingend vor.

Von den für die Entsorgung von Böden bekanntgewordenen Einrichtungen und Verfahren werden heute vor allem folgende fünf Methoden benutzt:

1. Die Behandlung des Bodens an Ort und Stelle durch Auf- oder Einbringen von biologischen Trägersubstanzen, die mit entsprechenden Bakterien beaufschlagt sind, hat sich im oberflächennahen Bereich bewährt. Die Schadstoffe können jedoch durch Niederschlagswasser in größere Tiefen transportiert werden, wo sie, wenn überhaupt, nur noch schwierig durch einen biologischen Abbauprozeß erreicht werden.

2. Das Ausheben und Auswaschen kontaminierter Böden mit geeigneten Waschmitteln, ist ein relativ teures Verfahren, vor allem dann, wenn immer niedrigere vorgeschriebene Grenzwerte der Restverunreinigung eingehalten werden sollen. Außerdem wird die biologische Substanz des Bodens geschädigt.

3. Das Ausheben der Böden und Ausbrennen der Schadstoffe, erfordert, je nach Schadstoffart, Behandlungstemperaturen von ca. 650°C, und gegebenenfalls auch über 1200°C und führt in jedem Fall im Ergebnis zu sterilem Bodenmaterial, das nur noch für Sonderzwecke verwendbar ist.

4. Das Ausheben und chemische Binden von Schadstoffen mit anschließendem Recycling des behandelten Bodens z.B. als Baustoff- oder Abdeckmaterial für Deponien gilt als vergleichsweise erfolgreich. Diese Verfestigung der Schadstoffe, die nämlich in einer Trägersubstanz chemisch gebunden sind, führt ebenfalls grundsätzlich zu einer Verlagerung der Probleme,da ein Auswaschen der Schadstoffe aus der Trägersubstanz in unbestimmter Zukunft nicht mit letzter Sicherheit auszuschließen ist.

5. Das Ausheben und Abtransportieren kontaminierter Böden zum biologischen Abbau der Schadstoffe in entsprechenden Einrichtungen zur Zwischen- oder Endlagerung ist, soweit es sich um biologisch abbaubare Schadstoffe handelt, eine vor allem aus zwei Gründen bevorzugte Methode. Zum einen erfolgt bei dieser Methode eine tatsächliche Entsorgung, durch einen biologischen Stoffwechselprozeß ohne die Probleme auf andere Bereiche zu verlagern, und zum anderen ergibt sich ein je nach den Umständen biologisch gesunder Boden, der gegebenenfalls ohne weiteres auch als Mutterboden verwendbar ist.

Bei der Anwendung dieser Methode muß darauf geachtet werden, daß keine Schadstoffe aus dem kontaminierten Boden ausgewaschen werden und/oder versickern und so den Unterboden verunreinigen. Dshalb werden Dichtungsfolien als wasser- und schadstoffdichte Unterlagen zum Schutz des Unterbodens und des grundwassers verwendet. Es hat sich jedoch gezeigt, daß Folien keinen geeigneten Untergrund bilden, wenn im Falle einer Zwischenlagerung der Böden Räumgeräte zum Abladen und Aufschichten sowie zum Ausheben eingesetzt werden.Folien sind leicht zu bescheidigen und werden durch

Beschädigungen leicht undicht, eine Wiederverwendung nach einmaliger Nutzung wird in der Regel nicht zugelassen.

Ungeschützt im Freien lagernder Boden kühlt insbesondere im Winter leicht aus, so daß der biologische Umwandlungsprozeß stark verzögert oder gar unterbrochen wird, so daß im Winter Unterbrechungen von mehreren Monaten eintreten können. Nachgewiesen wurden Unterbrechungen von bis zu sechs Monaten. Im übrigen unterliegt die Bodenflora im Freien den jahreszeitlich bedingten Vegetationsperioden mit zumindest eingeschränkter Wirksamkeit. versucht, dieser Entwicklung durch Abdecken der Böden mit Kunststoffbahnen entgegenzuwirken. Der von dieser Maßnahme erhoffte Treibhauseffekt kann jedoch nicht verhindern, daß sich eine längere Behandlungsdauer ergibt, so daß im Ergebnis sehr große Bodenflächen als Zwischen- oder Endlager gebraucht werden.

Bei einer aus der EP-A-0 192285 bekannten Einrichtung der eingangs genannten Art, von der die vorliegende Erfindung ausgeht, besteht das mit einzulagerndem und zu behandelndem Boden beladbare Lagerelement sowie mindestens ein Teil der Wandung an den Seiten des Lagerkörpers und oberhalb desselben aus Kunststofffolie. Die Lagerkörper füllen flache im Erdboden gebildete Lager- und Behandlungsmulden, über denen sich eine aufgespannte Folienabdeckung als Wandung wölbt, die vor allem den Zutritt von Regenwasser zu dem Lagerkörper verhindern und Sonnenlicht durchlassen soll. Die Möglichkeiten eines Folienbettes bei der Behandlung von verunreinigtem Boden sind jedoch, wie vorstehend erläutert ist, begrenzt. Hinzu kommt, daß sich solche Einrichtungen nicht wirtschaftlich betreiben lassen, weil sie nur eine geringe Stauhöhe bzw. Schütthöhe zulassen - in der EP-A-0 192285 wird eine Stauhöhe von ca. 70 cm in einem Ausführungsbeispiel angegeben -, so daß ein entsprechend hoher Flächenbedarf vor allem bei der Einlagerung und Behandlung größerer Bodenmengen besteht. Der Folienboden ist auch anfällig für Risse. Er ist deshalb nicht mehrmals verwendbar, wie oben dargelegt, und er läßt sich nicht mit schwerem Gerät befahren, dessen Verwendung für den An- und Abtransport sowie zum Umsetzen des zu behandelnden Bodens jedoch unerläßlich ist, wenn eine wirtschaftliche Wiederaufbereitung verlangt wird. Die Einbettung der Bodenbehandlungsmulden in den Erdboden bedingt außerdem eine Abhängigkeit des biologischen Umwandlungsprozesses von der jeweiligen Temperatur im Erdboden, die auch in der wärmeren Jahreszeit deutlich unterhalb einer für die biologische Umwandlung günstigen Temperatur liegt. Die Einwirkung der

Sonnenstrahlen durch die Folie hindurch kann die Temperturverhältnisse nur zeitweise, und auch nur dort, wo die Sonnenstrahlen hingelangen, verbessern, und die geringe Stau- bzw. Schütthöhe des Lagerkörpers, mit der erreicht werden soll, daß ein möglichst großes Bodenvolumen für die Sonneneinstrahlung erreichbar ist, hat den schon erwähnten großen Flächenbedarf für die Behandlungseinrichtung zur Folge.

Aus der DE-A-3507240 ist zwar bereits eine Einrichtung für die Lagerung von Sondermüll bekannt, bei welcher der Müll auf einer zur Begehung unterkellerten Betonplattform ruht, so daß keine Gefahr von Rissen wie im Falle eines Folienbodens besteht, durch die verunreinigtes Sickerwasser in das Erdreich unterhalb der Einrichtung dringen kann, es werden auch sehr große Stau- bzw. Schütthöhen von bis zu 50 m erzielt, aber diese Einrichtung eignet sich nicht für die Lagerung und Behandlung von mit organisch abbaubaren Schadstoffen belasteten Böden. Da es sich bei dieser Einrichtung um eine Mülldeponie handelt, ist die Einlagerung des Mülls stationär und endgültig. Es ist keine Aufbereitung vorgesehen, und deshalb wird auch kein Durchsatz von möglichst kurzzeitig einzulagerndem und zu behandelndem Boden verlangt. Folglich ist die Betonplattform auch nicht zum Befahren mit schwerem Gerät vorgesehen, und es gibt keine Vorrichtungen für die Beeinflussung der physikalischen Bedingungen im Lagerkörper. Die Betonplattform besteht vielmehr aus getrennten Plattenabschnitten, die sich unabhängig voneinander den unterschiedlichen Setzungen des darunter befindlichen Bodens anpassen, und hierfür sind entspechende Abdeckungen der zwischen den Plattenabschnitten entstehenden Raumfugen und eine ausreichende Abdichtung gegen unkontrolliertes Austreten von Sickerwasser vorgesehen.

Es besteht daher die Aufgabe, eine Einrichtung zum Einlagern und Entsorgen von mit organisch abbaubaren Schadstoffen belasteten Böden zu schaffen, die sich mit möglichst hoher Wirtschaftlichkeit herstellen und betreiben läßt und mit der die vorstehenden Nachteile vermieden werden.

Die erfindungsgemäße Lösung zeichnet sich dadurch aus, daß das Lagerelement aus einer ein- oder mehrteiligen, im wesentlichen starren, mit dem Lagerkörper in für eine wirtschaftliche Betriebsweise ausreichender Stauhöhe belastbaren und aufgrund ihrer Belastbarkeit mit Transportfahrzeugen und Umschlaggerät befahrbaren, insbesondere an der Aufnahmefläche druckfesten, im wesentlichen ebenen sowie zur Beeinflussung der Temperatur des Lagerkörpers beheizbaren Lagerplatte aus gegenüber den häufigsten Schadstoffen unempfindlichem Material wie Beton und die Wandung aus gestaltfesten Seiten- und Dachelementen besteht.

Es wurde bereits eingangs darauf hingewiesen, daß, diese Einrichtungen auch als Bausatz aus Fertigteilen vorzusehen ist, damit sie in einer entsprechenden Produktionsstätte in wirtschaftlicher Weise herstellbar und am Ort der Einlagerung bzw. Behandlung leicht montierbar und nach Gebrauch gegebenenfalls abbaubar ist.

Die erfindungsgemäße Einrichtung läßt eine optimale biologische Behandlung schadstoffbelasteter Böden zu, die ausgehoben und zu der stationär angeordneten Einrichtung transportiert sind. Die Lagerplatte läßt eine Aufschichtung des Bodenmaterials in ausreichender Stauhöhe zu. Gleichzeitig bildet die Lagerplatte eine gegen Versickern von Schadstoffen oder dergleichen abgedichtete Aufnahmefläche, die aufgrund ihrer Belastbarkeit auch mit Transportfahrzeugen und Umschlaggerät befahren werden kann, ohne daß die Dichtung gefährdet wird. In entsprechender Ausbildung kann die den Lagerkörper umschließende Wandung insbesondere im plattennahen Bereich zu einer Vergrößerung des staubaren Volumens führen. Die Wandung soll den Lagerkörper möglichst so umschließen, daß gegebenenfalls auch bereits ohne Beheizung durch die beim biologischen Abbauprozeß entstehende Wärme eine treibhausähnliche Aufheizung des Lagerkörpers erfolgt. Die Kombination aus Lagerplatte und Wandung läßt bei entsprechender Gestaltung eine wesentliche Begünstigung des biologischen Abbauprozesses durch eine gezielte Steuerung des Wassergehalts des schadstoffbelasteten Bodens sowie der für den aeroben Prozeß notwendigen Belüftung durch Zuführung bzw. Einführung von Luft an bzw. in den Lagerkörper sowie der die mikrobiologische Belebung und Umsetzung fördernden Temperatur durch eine entsprechende Beheizung des Lagerkörpers mittels der beizbaren lagerplatte zu. Je genauer die Klimasteuerung innerhalb des Lagerkörpers ist, desto intensiver und rascher erfolgt insgesamt der biologische Abbau der Schadstoffe und um so größer wird die Wirtschaftlichkeit der Einrichtung. Auch die zulässige Stauhöhe und damit die Wirtschaftlichkeit wächst mit der Homogenität der klimatischen Bedingungen im Innern des Lagerkörpers.

Die den Lagerkörper umschließende Wandung soll zweckmäßig neben Seitenwandelementen auch Dachelemente für eine optimale Klimahaltung und -kontrolle aufweisen.

Die druckfeste, im wesentlichen ebene Lagerplatte kann auch durch den Boden eines transportablen Containers gebildet sein. Die erfindungsgemäße Einrichtung muß folglich nicht notwendigerweise ein stationäres Bauwerk bilden. Container eignen sich vor allem dort, wo kleinere Bodenmengen oder Sondermengen zu behandeln sind oder wo von vornherein davon auszugehen ist, daß die Einrichtung nur zeitweise gebraucht wird.

Zur Beheizung der lagerplatte zum Zweck der Aufrechterhaltung eines möglichst gleichmäßigen Treibhausklimas soll in die Lagerplatte ein Heizsystem, insbesondere ein Rohrleitungssystem, eingebaut sein. Die aufsteigende Wärme durchdringt den Lagerkörper und sorgt bei entsprechender Einstellung der Heizung für die Einhaltung eines die Prozeßzeiten abkürzenden optimalen Temperaturniveaus.

Zu dem gleichen Zweck kann (auch) die Wandung Seitenwände umfassen, in die ein Heizsystem, insbesondere ein Rohrleitungssystem, eingebaut ist. Insbesondere bei relativ großen Stauhöhen wird auf diese Weise eine Auskühlung der Lagerkörperseiten vermieden, so daß stets eine gleichmäßge Durchwärmung des Lagerkörpers erfolgt.

Zweckmäßig ist vorgesehen, daß das Rohrleitungssystem mit einem zirkulierenden Medium wie Wasser oder Luft als Wärmeträger beheizbar ist. Hier kann zur Erhöhung der Wirtschaftlichkeit auch Abwärme genutzt werden. Denn diese steht jedenfalls dann mit geringem Kostenaufwand zur Verfügung, wenn sich die Einrichtung weitab von sonstigen Möglichkeiten der wirtschaftlichen Abwärmenutzung, z.B. in unmittelbarer Nähe einer Mülldeponie befindet und Deponiegas entweder direkt durch Verbrennung oder direkt z.B. als Abwärme aus einem Gasblockheizkraftwerk genutzt werden kann.

Für einen optimal ablaufenden biologischen, aeroben Abbauprozeß ist es vorteilhaft, wenn die am Lagerkörper zugeführte Zuluft beheizt wird. Die Beheizung kann in der gleichen wirtschaftlichen Weise, wie vorstehend erläutert, erfolgen.

Ebenso ist es möglich, das für einen biologischen Prozeß erforderliche Wasser vor der Zuführung zu dem Lagerkörper zu beheizen.

Zur Reduzierung der für die biologische Behandlung erforderlichen Wassermenge ist es vorteilhaft, dem Lagerkörper das für den Umwandlungsprozeß benötigte Wasser mindestens teilweise im Recycling, gegebenenfalls wieder aufbereitet zuzuführen.

Ebenfalls der Aufrechterhaltung eines optimalen biologischen Klimas dient die Maßnahme, den Lagerkörper der Wirkung eines Belüftungssystems auszusetzen, das den Lagerkörper gegebenenfalls auch durchsetzt. Denn vorzugsweise besteht das Belüftungssystem aus vertikal und/oder horizontal und/oder schräg in dem Lagerkörper angeordneten gelochten oder geschlitzten Rohren oder Schläuchen.

Ausführungsbeispiele der Neuerung werden nachfolgend mit Bezug auf die Zeichnung erläutert.In der Zeichnung zeigen:

Fig. 1  eine Darstellung einer Einrichtung zum Einlagern und Behandeln von mit organisch abbaubaren Schadstoffen belasteten Böden als Querschnitt, versehen mit einer Bodenbeheizung;

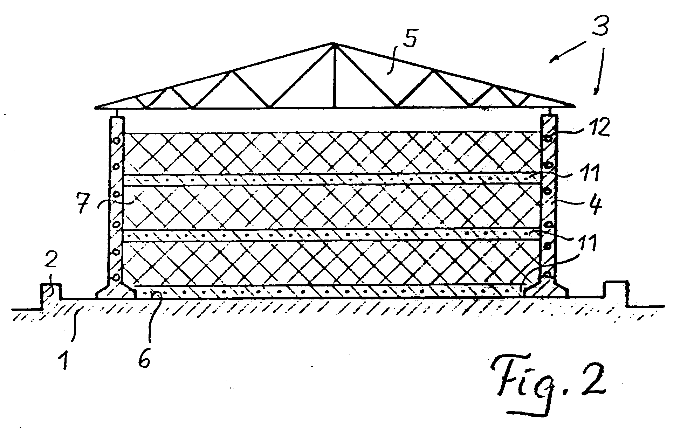

Fig. 2  eine Darstellung einer Einrichtung wie in Fig. 1, die jedoch mit einer Seitenbeheizung versehen ist;

Fig. 3  eine Darstellung einer Einrichtung wie in Fig. 1 und 2, jedoch mit einem eingelegten Heizungssystem;

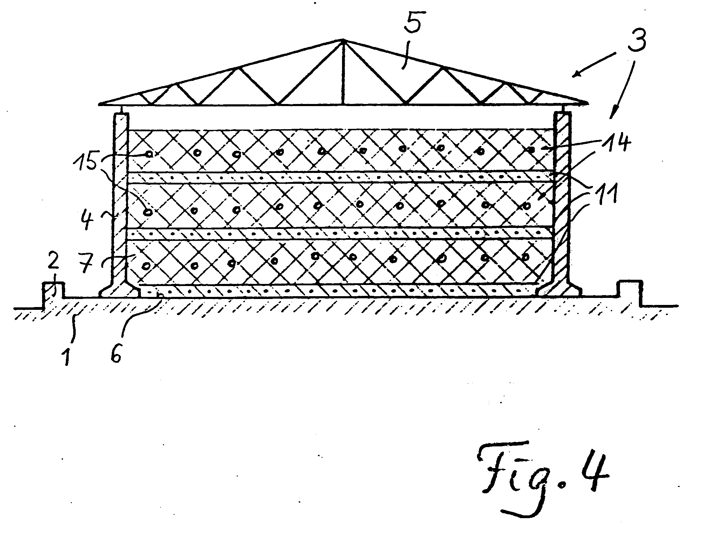

Fig. 4  eine Einrichtung in ähnlicher Darstellung wie in den vorhergehenden Figuren, jedoch mit einer horizontalen Belüftung und Drainage;

Fig. 5  eine weitere den Darstellungen in den vorhergehenden Figuren ähnliche Ansicht einer Einrichtung, die mit einer Vertikalbelüftung und -drainage versehen ist;

Fig. 6  eine Ansicht einer weiteren Ausführungsform einer Einrichtung mit kombinierter Belüftung und Drainage über Gefällerohr- bzw. Schlauchstrecken, dargestellt als vertikaler Längsschnitt;

Fig. 7  eine Querschnittsansicht einer weiteren Ausführungsform einer Einrichtung, die mit einer im Recycling betriebenen Berieselung versehen ist.

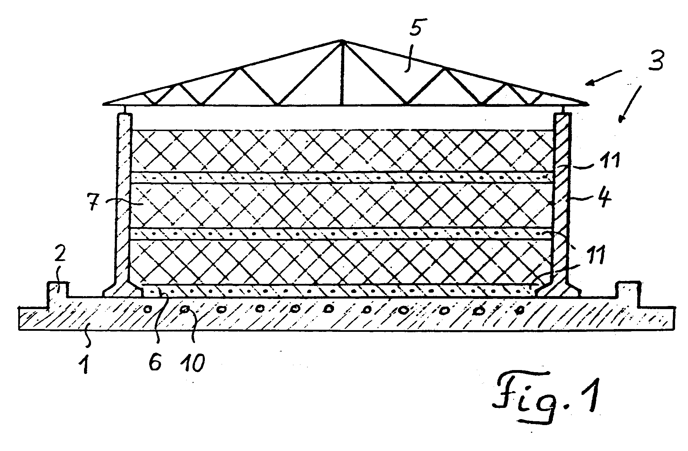

In dem Ausführungsbeispiel gemäß Fig. 1 besteht eine Einrichtung zum Einlagern und Behandeln kontaminierter Böden aus einer Lagerplatte 1 mit einer Einfassung 2 und einer Wandung 3, die aus Seitenelementen 4 und Dachelementen 5 gebildet ist.

Diese Bauteile werden als Bausatz vorgefertigt und an Ort und Stelle zu der Einrichtung verbunden. Die aus mehreren Teilen zusammengesetzte Lagerplatte 1 besteht ebenso wie die Seitenelemente 4 aus Beton. Die Dachelemente 5 sind leicht abnehmbar. Bei vorgegebener Breite bemißt sich die Länge der Einrichtung nach der jeweils erforderlichen Lagerkapazität.

Innerhalb der Wandung 3 ist auf einer Aufnahmefläche 6 der Lagerplatte 1 mit organisch abbaubaren Schadstoffen belasteter Boden als Lagerkörper 7 eingefüllt.

Dem von der Wandung 3, die zweckmäßig auch an den Stirnseiten verschließbar ist, umschlossenen Lagerkörper 7 wird Wärme zugeführt, im vorliegenden Beispiel über eine Bodenbeheizung durch ein Rohrleitungssystem 10 in der Lagerplatte 1.

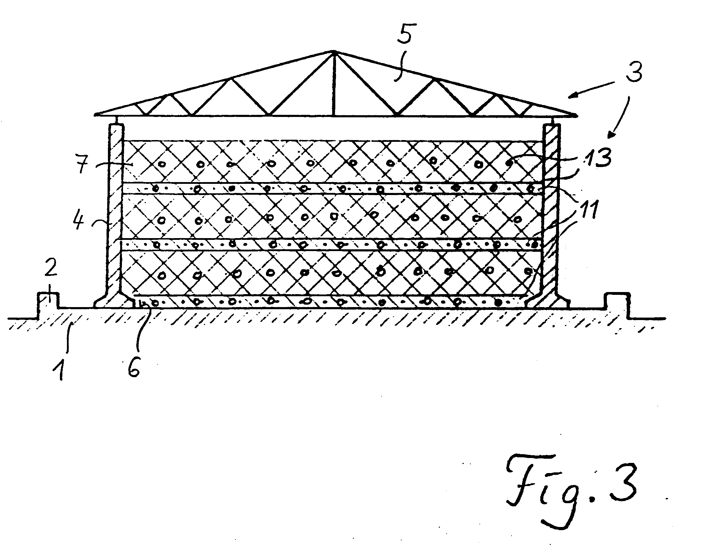

Statt einer oder zusätzlich zu einer Bodenbeheizung kann auch eine Seitenbeheizung durch Anordnung eines Rohrleitungssystems 12 in den Seitenelementen 4 vorgesehen sein, damit dem Lagerkörper 7 (auch) von den Seiten her Wärme zugeführt wird, um ein möglichst gleichmäßiges Temperaturniveau innerhalb des Lagerkörpers 7 zu erreichen. Statt oder zusäztlich zu der Bodenbeheizung und/oder Seitenbeheizung kann für den vorgenannten Zweck auch ein eingelegtes Heizungssystem gemäß Fig. 3 vorgesehen sein, das aus in den Lagerkörper 7 und/oder in die Zwischenschichten 11 eingelegte Rohre bzw. Schläuche 13 besteht.

Zuluft wird dem Lagerkörper 7 über ein Belüftungssystem 14 zugeführt, das aus den Lagerkörper 7 horizontal durchsetzenden Rohren oder Schläuchen 15 besteht. Das Belüftungssystem 14 kann bei entsprechender Ausbildung auch zur Drainage dienen.

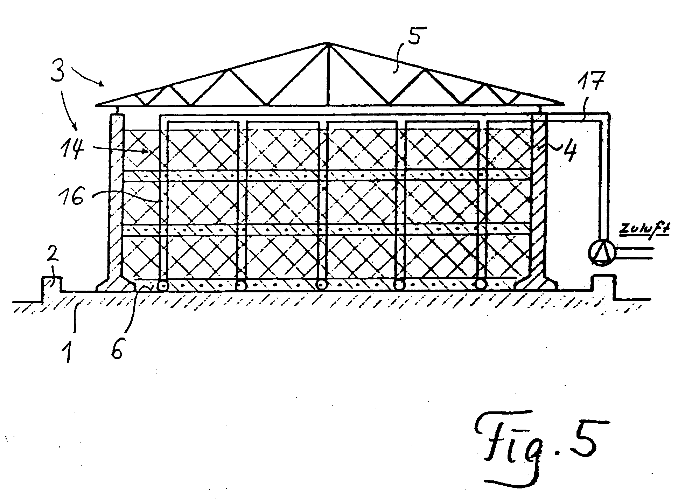

Das Belüftungssystem 14 kann jedoch auch aus vertikal durch den Lagerkörper 7 geführten Rohren 16 gemäß der Anordnung von Fig. 5 gebildet sein, die über mindestens eine zentrale Zuleitung 17 gespeist werden. Auch in diesem Fall kann das Belüftungssystem 14, wie aus Fig. 5 hervorgeht, gleichzeitig zur Entwässerung des Lagerkörpers 7 dienen.

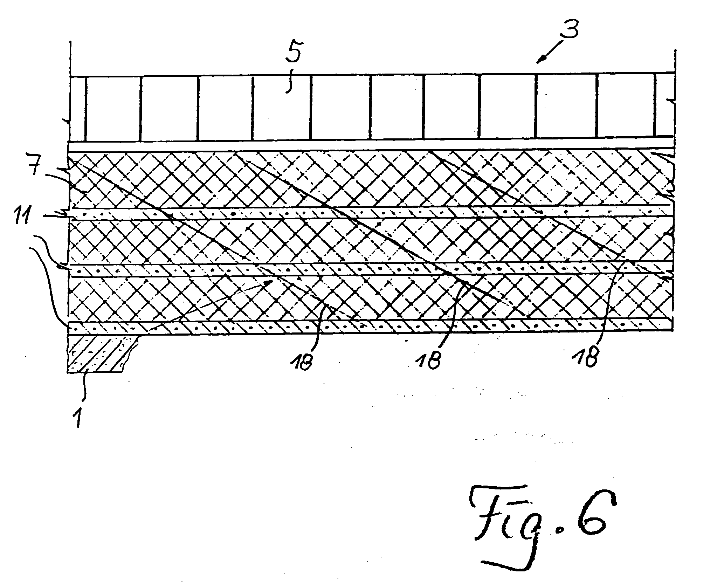

Ein weiteres Ausführungsbeispiel für ein gleichzeitig der Drainage dienendes Belüftungssystem 14, bestehend aus schräg nach unten durch den Lagerkörper 7 verlaufenden Schläuchen oder Rohren 18 , ist Fig. 6 zu entnehmen.

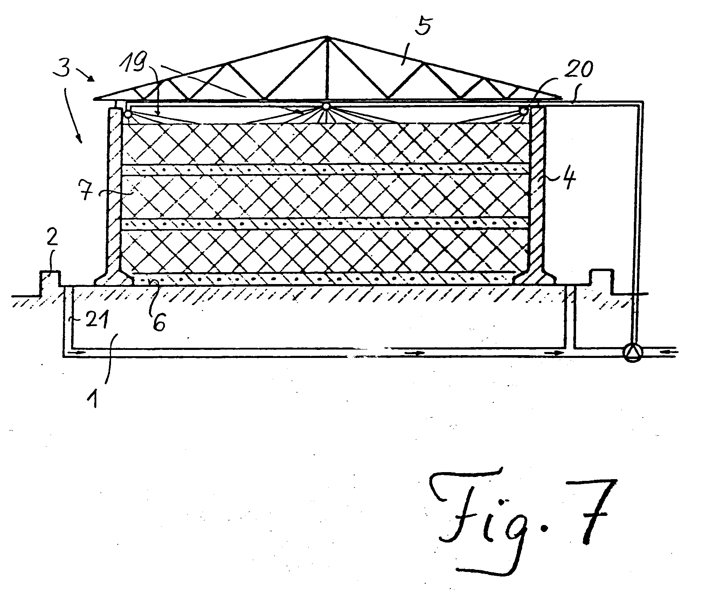

In dem Ausführungsbeispiel einer Einrichtung gemäß Fig. 7 ist oberhalb des Lagerkörpers 7 ein Berieselungssystem 19 vorgesehen, das dem Lagerkörper 7 das für einen biologischen Prozeß erforderliche Wasser über ein Rohr- und Düsensystem 20 zuführt. Das durch den Lagerkörper 7 hindurchsickernde Wasser wird in Sammelleitungen 21 aufgefangen und im Recycling wieder dem Lagerkörper 7 zugeführt.

Sowohl das Wasser für die Berieselung als auch die Zuluft können erwärmt sein. Für die Beheizung der Rohrleitungssysteme 10,12 etc. kann erwärmtes Wasser oder Luft als zirkulierendes Medium benutzt werden.

**Patentansprüche**

1. Einrichtung zum Einlagern und Behandeln von mit organisch abbaubaren Schadstoffen belasteten Böden in Form eines Lagerkörpers (7), mit einem eine Abdichtung bildenden, mit einem Lagerkörper (7) aus Boden in Form von Schüttgut oder Blöcken beladbaren Lagerelement und mit mindestens einer Vorrichtung für die Beeinflussung der physikalischen Bedingungen im Lagerkörper (7) wie Frischluftanteil, Frischluftdurchsatz und Feuchtigkeit und mit einer den Lagerkörper (7) umschließenden Wandung (3), dadurch **gekennzeichnet,** daß das Lagerelement aus einer ein- oder mehrteiligen, im wesentlichen starren, mit dem Lagerkörper (7) in für eine wirtschaftliche Betriebsweise ausreichender Stauhöhe belastbaren und aufgrund ihrer Belastbarkeit mit Transportfahrzeugen und Umschlaggerät befahrbaren, insbesondere an der Aufnahmefläche (6) druckfesten, im wesentlichen ebenen sowie zur Beeinflussung der Temperatur des Lagerkörpers beheizbaren Lagerplatte (1) aus gegenüber den häufigsten Schadstoffen unempfindlichem Material wie Beton und die Wandung (3) aus gestaltfesten Seiten- und Dachelementen (4); (5) besteht.

2. Einrichtung nach Anspruch 1, dadurch **gekennzeichnet,** daß die druckfeste, im wesentlichen ebene Lagerplatte (1) den Boden eines transportablen Containers bildet.

3. Einrichtung nach Anspruch 1 oder 2, dadurch **gekennzeichnet,** daß der Lagerkörper (7) durch ein eingebautes Heizsystem, insbesondere ein in die lagerplatte (1) eingebautes Rohrleitungssystem (10; 12) beheizbar ist.

4. Einrichtung nach einem oder mehreren der Ansprüche 1 bis 3, **gekennzeichnet** durch eine Zuführung von vorgewärmtem, für einen biologischen Prozeß erforderlichem Wasser zu dem Lagerkörper (7).

5. Einrichtung nach einem oder mehreren der Ansprüche 1 bis 4, dadurch **gekennzeichnet,** daß dem Lagerkörper (7) das für den biologischen Umwandlungsprozeß benötigte Wasser mindestens teilweise im Recycling, gegebenenfalls wiederaufbereitet, zugeführt wird.

6. Einrichtung nach einem oder mehreren der Ansprüche 1 bis 5, dadurch **gekennzeichnet,** daß für den Lagerkörper (7) ein Belüftungssystem (14), das beheizbar sein kann, vorgesehen ist für die Zuführung von gegebenenfalls vorgewärmter, für einen aeroben biologischen Prozeß erforderlicher Zuluft.

7. Einrichtung nach Anspruch 6, dadurch **gekennzeichnet,** daß das Belüftungssystem (14) aus vertikal und/oder horizontal und/oder schräg in dem Lagerkörper (7) anzuordnenden gelochten oder geschlitzten, gegebenenfalls flexiblen Rohren (13; 16) oder Schläuchen (18) besteht.

**Claims**

1. Apparatus for incorporating and treating soils containing organically decomposable pollutants in the form of a storage body (7) having a storage element forming a seal and loadable with a storage body (7) formed from soil in the form of bulk material or blocks, and with at least one device for influencing the physical conditions in the storage body (7) such as the fresh air proportion, the fresh air throughout and the moisture, and with a wall (3) surrounding the storage body (7), characterized in that the storage element comprises a one-part or multipart storage plate (1), which is substantially rigid, which can be loaded with the storage body (7) in a packing height adequate for economic operation and which, as a result of its loading capacity can be overtravelled by transportation vehicles and transfer equipment, which is in particular pressure-resistant on the reception surface (6), substantially planar and heatable for influencing the temperature of the storage body and which is made from material, such as concrete, which is insensitive to the most frequently encountered pollutants and the wall (3) comprises form-stable side and roof elements (4,5).

2. Apparatus according to claim 1, characterized in that the pressure-resistant, substantially planar storage plate (1) forms the base of a transportable container.

3. Apparatus according to claims 1 or 2, characterized in that the storage body (7) is heatable by an incorporated heating system, particularly a pipeline system (10,12) installed in the storage plate (1).

4. Apparatus according to one or more of the claims 1 to 3, characterized by a supply of preheated water necessary for the biological process to the storage body (7).

5. Apparatus according to one or more of the claims 1 to 4, characterized in that the storage body (7) is supplied with the water necessary for the biological conversion process, at least partly in recycled form and optionally in reprocessed form.

6. Apparatus according to one or more of the claims 1 to 5, characterized in that a heatable ventilation system (14) is provided for the storage body (7) for the supply of optionally preheated feed air necessary for an aerobic biological process.

7. Apparatus according to claim 6, characterized in that the ventilation system (14) comprises perforated or slotted, optionally flexible tubes (13,16) or hoses (18) to be arranged vertically and/or horizontally and/or obliquely in the storage body (7).

**Revendications**

1. Dispositif pour stocker et traiter des sols contaminés par des substances polluantes dégradables de manière organique en forme de corps à stocker (7) avec un élément de stockage formant un étanchement et pouvant être chargé de sol en forme de matière en tas ou en blocs et avec au moins un dispositif pour influencer les conditions physiques dans le corps à stocker (7), telles que la proportion d'air frais, le débit d'air frais et l'humidité, et avec une paroi (3) qui entoure le corps à stocker (7), **caractérisé en ce** que l'élément de stockage est constitué par une plaque de stockage (1) en une ou plusieurs pièces, substantiellement rigide, pouvant être chargée par le corps à stocker à une hauteur de retenue suffisante pour un fonctionnement rentable et qui, en raison de sa capacité portante, est praticable par des véhicules de transport et des engins de transbordement, qui est résistante à la pression en particulier sur sa face de réception (6), qui est substantiellement plate et qui peut être chauffée pour influencer la température du corps à stocker, qui est constituée par un matériau qui est insensible aux substances polluantes les plus fréquentes telles que le béton et que la paroi (3) est constituée par des éléments de côté et de toit (4 : 5) de forme stable.

2. Dispositif selon la revendication 1, **caractérisé en ce** que la plaque de stockage (1) résistante à la pression, substantiellement plate, forme le fond d'un conteneur transportable.

3. Dispositif selon la revendication 1 ou 2, **caractérisé en ce** que le corps à stocker (7) peut être chauffé par un système de chauffage intégré, en particulier par un système de tuyauteries (10 : 12) intégré à la plaque de stockage (1).

4. Dispositif selon l'une ou plusieurs des revendications 1 à 3, **caractérisé par** une amenée au corps à stocker (7) d'eau préchauffée, nécessaire à un processus biologique.

5. Dispositif selon l'une ou plusieurs des revendications 1 à 4, **caractérisé en ce** que l'eau nécessaire au processus de transformation biologique est amenée au corps de stockage (7) au moins partiellement en recyclage, le cas échéant en étant traitée.

6. Dispositif selon l'une ou plusieurs des revendications 1 à 5, **caractérisé en ce** qu'un système d'aération (14), qui peut être chauffé, est prévu pour le corps à stocker (7) pour l'amenée d'air amené, le cas échéant préchauffé, qui est nécessaire à un processus biologique aérobie.

7. Dispositif selon la revendication 6, **caractérisé en ce** que le système d'aération (14) est constitué par des tubes (13 : 16) ou tuyaux (18) perforés ou fendus, le cas échéant flexibles, qui doivent être disposés verticalement et/ou horizontalement et/ou en biais dans le corps à stocker (7).

Fig.1

*Fig. 2*

Fig.3

Fig. 4

Fig.5

5

3

7

11

1

18    18    18

*Fig.6*

Fig. 7